# EUROPÄISCHE PATENTSCHRIFT

(11) **EP 4 577 374 B1**
(45) Veröffentlichungstag und Bekanntmachung des Hinweises auf die Patenterteilung: **02.09.2026**
(21) Anmeldenummer: 23748966.1
(22) Anmeldetag: 24.07.2023
(51) Int. Cl.: B23K 26/06, B23K 26/38, B23K 26/03

(54) **LASERSCHNEIDEN EINES WERKSTÜCKS UNTER SCHUTZ DER BEARBEITUNGSVORRICHTUNG**
LASER CUTTING OF A WORKPIECE WITH PROTECTION BY THE MACHINING DEVICE
DÉCOUPE AU LASER D'UNE PIÈCE À USINER AVEC PROTECTION PAR LE DISPOSITIF D'USINAGE

(30) Priorität: 24.08.2022 DE 102022121341
(43) Veröffentlichungstag der Anmeldung: 02.07.2025
(73) Patentinhaber: TRUMPF Werkzeugmaschinen SE + Co. KG, 71254 Ditzingen (DE)
(72) Erfinder: MAGG, Winfried, 71254 Ditzingen (DE); RENZ, Bernd, 71726 Benningen am Neckar (DE)
(74) Vertreter: Trumpf Patentabteilung
(86) Internationale Anmeldenummer: PCT/EP2023/070408
(87) Internationale Veröffentlichungsnummer: WO 2024/041823

(56) Entgegenhaltungen:
- DE-A1- 102018 129 407
- US-A1- 2019 375 051
- US-A1- 2021 387 280

## Beschreibung

### Hintergrund der Erfindung

Die Erfindung betrifft ein Verfahren zum Überwachen eines Schneidprozesses eines Werkstücks mit einem Laserstrahl. Die Erfindung betrifft auch eine Bearbeitungsvorrichtung zur Durchführung eines solchen Verfahrens.

Die DE 10 2018 218 006 A1 offenbart ein Schmelzschneidverfahren, bei dem durch eine bildgebende Sensorik eine charakteristische Länge einer Schneidfront ermittelt und auf eine vorgegebene Soll-Länge geregelt wird, um Fehler beim Schneiden zu vermeiden, insbesondere Schnittabrisse. Ähnlich behandelt die WO 2012/107331 A1 die Ermittlung charakteristischer geometrischer Parameter der Schneidfront und einer Schnittfuge bei einem Laserschneidverfahren zur Steuerung des Schneidverfahrens mit Hilfe einer Kamera.

Die offenbarten Schneidverfahren betreffen vor allem die Erzeugung eines hochwertigen Schnitts des Werkstücks.

Aus der DE 10 2018 129 407 A1 ist ein Verfahren zum Schneiden eines Werkstücks mittels eines Laserstrahls bekannt, umfassend: Erzeugen eines Schnittspalts auf dem Werkstück entlang einer Schneidrichtung mittels eines Laserstrahls in einem Schneidvorgang; Richten eines optischen Messstrahls eines optischen Kohärenztomographen auf den Schnittspalt; Auslenken des optischen Messstrahls; und Vermessen wenigstens einer geometrischen Eigenschaft des Schnittspalts mit Hilfe des optischen Kohärenztomographen.

Aus der US 2019/375051 A1 ist eine Vorrichtung und ein Verfahren zur Überwachung oder Regelung eines Schneidprozesses an einem Werkstück bekannt. Ein Fokussierelement fokussiert einen Hochenergiestrahl auf das Werkstück. Eine Bilderfassungsvorrichtung erfasst einen zu überwachenden Bereich am Werkstück.

Der Bereich umfasst einen Wechselwirkungsbereich des Hochenergiestrahls mit dem Werkstück. Eine Steuervorrichtung ermittelt anhand des erfassten Wechselwirkungsbereichs mindestens eine Kenngröße des Schneidprozesses, insbesondere einer während des Schneidprozesses gebildeten Schnittfuge.

### Aufgabe der Erfindung

Es ist demgegenüber Aufgabe der vorliegenden Erfindung, ein Verfahren zum Durchschneiden eines Werkstücks mit einem Laserstrahl anzugeben, bei welchem die Umgebung des Werkstücks besser vor dem Laserstrahl geschützt wird, insbesondere eine Auflage für das Werkstück. Es ist weiter Aufgabe der Erfindung, eine Bearbeitungsvorrichtung zur Durchführung des Verfahrens bereitzustellen.

### Beschreibung der Erfindung

Diese Aufgabe wird erfindungsgemäß durch ein Verfahren nach Anspruch 1 gelöst. Die Merkmale einer erfindungsgemäßen Bearbeitungsvorrichtung sind in Anspruch 13 angegeben. Vorteilhafte Ausgestaltungen ergeben sich aus den rückbezogenen Unteransprüchen.

Das erfindungsgemäße Verfahren weist die folgenden Schritte auf:
a) Bestrahlen einer Oberseite des Werkstücks mit einem Laserstrahl;
b) Durchschneiden des Werkstücks mit dem Laserstrahl mit einem Schnitt von der Oberseite des Werkstücks zu einer Unterseite des Werkstücks, wobei die Unterseite des Werkstücks in Strahlrichtung des Laserstrahls der Oberseite des Werkstücks gegenüberliegt, unter Ausbildung einer Schneidfront und einer Schnittfuge;
e) Begrenzen der Leistung eines durch das Werkstück hindurchgetretenen Teils des Laserstrahls auf ein vorgegebenes Maß, wobei der hindurchgetretene Teil des Laserstrahls beim Durchschneiden des Werkstücks auf der Unterseite des Werkstücks aus dem Werkstück austritt.

Ferner umfasst das Verfahren das Bestimmen eines Kennwerts für die Leistung des durch das Werkstück hindurchgetretenen Teils des Laserstrahls auf.

Das Verfahren ist besonders wirksam für Schneidverfahren mit Lasereinrichtungen, die mit hoher Leistung einen Laserstrahl emittieren. Dadurch kann bei diesen Verfahren auch ein Teil des Laserstrahls, der nicht von dem Werkstück absorbiert wird, sondern in den Maschinenraum der betreffenden Bearbeitungsvorrichtung abgestrahlt wird, eine hohe Menge an Energie transportieren. Insbesondere strahlt ein Teil des Laserstrahls durch ein Werkstück hindurch, das durch den Schneidprozess bearbeitet werden soll. Dies birgt die Gefahr, dass die Maschine durch lokale Erwärmung beschädigt wird oder sogar vollständig ausfällt.

Durch eine Regulierung dieses Teils kann die abgestrahlte Leistung des Laserstrahls reduziert werden, typischerweise durch eine Erhöhung der Schneidgeschwindigkeit und/oder eine Verminderung der Leistung des Laserstrahls, um eine Beschädigung der Bearbeitungsvorrichtung zu verhindern. Die Leistung des durch das Werkstück hindurchtretenden Teils des Laserstrahls ergibt sich zum Beispiel als Differenz der Leistung, mit der der gesamte Laserstrahl auf die Oberfläche des Werkstücks wirkt, und der Leistung, mit der der Laserstrahl auf die Schneidfront trifft. Ein vorgegebenes Maß, auf das die Leistung des Laserstrahls begrenzt wird, kann unter anderem durch vorherige Versuche an baugleichen Werkstücken ermittelt werden. Insbesondere können so Verfahrensparameter zum Erreichen einer vorbestimmten Leistung des durch das Werkstück hindurchgetretenen Teils des Laserstrahls in einem vorgegebenen Zeitintervall ermittelt werden.

Unter einer Schneidfront wird bevorzugt das Material des Werkstücks bzw. die geometrische Form von Material des Werkstücks verstanden, wobei dieses Material zu einem Zeitpunkt der Bestrahlung des Werkstücks durch den Laserstrahl bestrahlt und geschmolzen oder verdampft wird. Die Schneidfront bewegt sich mit dem Laserstrahl mit. Unter einer Schnittfuge wird bevorzugt der Spalt verstanden, der durch das Entfernen von Material aus dem Werkstück durch den Schneidprozess erzeugt wird. Die Schnittfuge liegt in einer Vorschubrichtung des Laserstrahls in der Regel hinter der Schneidfront. Die Schneidfront und die Schnittfuge wirken auf den Laserstrahl insbesondere wie eine Blende. Die Leistung des Teils des Laserstrahls, der durch das Werkstück hindurchtritt, wird bevorzugt als Leistungsüberschuss bezeichnet, mit anderen Worten der Teil oder Anteil der Leistung des Laserstrahls, welcher nicht für das Schneiden des Werkstücks umgesetzt wird.

Das erfindungsgemäße Verfahren kann auch angewendet werden, wenn der Konturschnitt eines Werkstücks unterbrochen wurde und nach einem Wiedereinstieg in das Schneidverfahren das Werkstück weiter geschnitten werden soll. Dazu wird der Schneidkopf in der Regel eine vergleichsweise kleine Distanz entlang der Schneidkontur zurückbewegt und schneidet dann wieder über der bereits geschnittenen Kontur weiter. Dabei kann ein großer Teil der Leistung des Laserstrahls durch die bereits geschnittene Schnittfuge hindurchtreten. Die Bestimmung des Leistungsüberschusses kann verwendet werden, um die Leistung des durch das Werkstück hindurchgetretenen Teils des Laserstrahls zu kontrollieren.

Die Leistung des durch das Werkstück hindurchtretenden Teils des Laserstrahls ergibt sich zum Beispiel als Differenz der Leistung, mit der der gesamte Laserstrahl auf die Oberfläche des Werkstücks wirkt, und der Leistung, mit der der Laserstrahl auf die Schneidfront trifft. Unter anderem kann die Differenz der Leistung, mit der der gesamte Laserstrahl auf die Oberfläche des Werkstücks wirkt, und der Leistung, mit der der Laserstrahl auf die Schneidfront wirkt, als Kennwert für die Leistung des durch das Werkstück hindurchtretenden Teils des Laserstrahls verwendet werden. Alternativ oder zusätzlich dazu können als Kennwert Verhältnisse der Leistung des hindurchgetretenen Teils des Laserstrahls zu dem von dem Werkstück absorbierten Teil des Laserstrahls und/oder zu der Leistung des gesamten Laserstrahls benutzt werden. Der Teil der Leistung des Laserstrahls, der von der Schneidfront reflektiert wird, hat in der Regel eine vergleichsweise geringe Wirkung auf eine verwendete Bearbeitungsvorrichtung und wird daher bevorzugt vernachlässigt. Vorteilhaft vermitteln Kennwerte eine konkrete Angabe der Leistung des durch das Werkstück hindurchgetretenen Teils des Laserstrahls, die in dem Regelungsprozess verwendet werden kann. Durch die Bestimmung der Leistung des Teils des Laserstrahls, der durch das Werkstück hindurchstrahlt, kann ermittelt werden, ob einer Bearbeitungsvorrichtung, mit der der Schneidvorgang durchgeführt wird, während des Schneidvorgangs durch diesen Teil des Laserstrahls zu viel Energie zugeführt wird, sodass die Bearbeitungsvorrichtung beschädigt wird. Dadurch kann das Schneidverfahren derart überwacht werden, dass ein Schaden an der Bearbeitungsvorrichtung verhindert wird.

Bei einigen Ausgestaltungen des Verfahrens kann durch Integration der Laserleistungsverteilung über die Fläche der Schneidfront der absorbierte Leistungsteil des Laserstrahls bestimmt und von der Leistung des gesamten Laserstrahls subtrahiert werden, um den Leistungsüberschuss zu bestimmen. Alternativ oder zusätzlich dazu kann durch eine Integration der Laserleistungsverteilung über die Fläche der Schnittfuge ein Kennwert für den Leistungsüberschuss bestimmt werden.

Gemäß einer vorteilhaften Ausgestaltung des Verfahrens erfolgt das Bestimmen der Leistung des hindurchgetretenen Teils des Laserstrahls mit Hilfe der Ausgangsleistung der Laserquelle zur Erzeugung des Laserstrahls, der Kaustik des Laserstrahls, der Rayleighlänge des Laserstrahls, der Position des Fokus des Laserstrahls, der Fokuslage, des Fokusdurchmessers, der Werkstückdicke und/oder des Abstands einer Schneiddüse, aus der der Laserstrahl austritt, zu dem Werkstück. Die angegebenen Parameter bestimmen besonders die Lage, Form und Leistungsdichte des Laserstrahls. Daher haben sie einen wesentlichen Einfluss auf die Form der Schneidfront und der Schnittfuge während des Schneidprozesses. Besonders die Krümmung der Schneidfront wird durch die angegebenen Parameter und die Vorschubgeschwindigkeit des Laserstrahls wesentlich mitbestimmt. Über diese Laserparameter kann somit gesteuert werden, welcher Teil des Laserstrahls absorbiert wird und welcher Teil durch das Werkstück hindurchtritt.

Im Rahmen einer bevorzugten Ausgestaltung weist das Verfahren die nachfolgenden Schritte auf:
c) das Aufnehmen eines Prozessbildes des gesamten von dem Laserstrahl durchdrungenen Teilvolumens des Werkstücks mit der Schneidfront, indem dieses Teilvolumen auf eine Aufnahmefläche eines Bildsensors projiziert wird, wobei der Bildsensor oberhalb der Oberseite des Werkstücks angeordnet ist;
d) das Bestimmen einer Länge der Schneidfront in einer Vorschubrichtung des Laserstrahls in der Ebene einer Strahlachse des Laserstrahls und der Vorschubrichtung des Laserstrahls anhand des Prozessbildes.

Das Teilvolumen des Werkstücks und besonders die Schneidfront strahlen bei dem Schneidvorgang in der Regel eine Beobachtungsstrahlung, vor allem eine Wärmestrahlung ab, die zur Aufnahme des Prozessbildes verwendet werden kann. Das Teilvolumen des Werkstücks umfasst insbesondere zu einem Bestrahlungszeitpunkt die Schneidfront und den Teil der Schnittfuge, der von dem Laserstrahl durchstrahlt wird.

Im Rahmen dieser Ausgestaltung wird mittels eines bildgebenden Sensors zur Schneidprozessregelung während des Schneidverfahrens der durch das Werkstück hindurchgetretene Teil des Laserstrahls durch ein bildgebendes Verfahren bestimmt oder abgeschätzt. Dazu wird ein Teilvolumen des Werkstücks mit der dreidimensionalen Prozesszone, in der der Schneidprozess stattfindet, auf die zweidimensionale Aufnahmefläche des bildgebenden Sensors abgebildet. Durch Einbeziehung der Lage und Ausrichtung des Sensors (und ggf. weiterer zur Abbildung verwendeter optischer Elemente) relativ zu dem Teilvolumen des Werkstücks mit der Prozesszone bzw. Schneidzone des Werkstücks, in der das Schneidverfahren stattfindet, kann die Länge der Schneidfront ermittelt werden. Das Prozessbild wird insbesondere durch eine Düse aufgenommen, aus der der Laserstrahl austritt. Die Länge der Schneidfront ermöglicht eine einfache Abschätzung, welcher Teil des Laserstrahls von der Schneidfront absorbiert wird.

Eine Weiterbildung der vorgenannten Ausgestaltung weist das Bestimmen weiterer Parameter des gesamten von dem Laserstrahl durchdrungenen Teilvolumens des Werkstücks anhand des Prozessbildes auf, insbesondere geometrischer Parameter und/oder der Intensitätsverteilung von Strahlung, die von dem Teilvolumen ausgestrahlt wird. Die Strahlung, die von dem Teilvolumen ausgestrahlt wird, ist insbesondere als Wärmestrahlung ausgebildet. Durch das Prozessbild des Teilvolumens können neben der Länge der Schneidfront unter anderem auch deren Breite und Form bestimmt werden. Weiterhin können der Intensitätsverlauf der Schneidfront und/oder der Intensitätsverlauf des ganzen abgebildeten Teilvolumens bestimmt werden. Die Bestimmung derartiger Parameter verbessert die Abschätzung der Größe und Form der Schneidfront und damit des von der Schneidfront absorbierten Teils des Laserstrahls.

Die Strahlachse der Strahlung zur Aufnahme des Prozessbildes weist bevorzugt ausgehend von dem Teilvolumen des Werkstücks einen Winkel von 0° bis 15° zur Strahlachse des Laserstrahls auf, insbesondere von 0° bis 5°. Insbesondere ist die Strahlachse der von dem Teilvolumen ausgestrahlten Wärmestrahlung, die auf den bildgebenden Sensor trifft, gegenüber der Strahlachse des Laserstrahls verkippt. Vorteilhaft können der bildgebende Sensor und ggf. die optischen Elemente zur Führung der Beobachtungsstrahlung bei dieser Ausgestaltung außerhalb des von dem Laserstrahl durchstrahlten Raumbereichs angeordnet werden, sodass sie nicht bestrahlt und beschädigt werden. Insbesondere kann das Prozessbild im Rahmen einer zeitgleichen schleppenden, stechenden und/oder senkrechten Beobachtung des Schneidvorgangs aufgenommen werden. Die verschiedenen Beobachtungsrichtungen können vorteilhaft für die Berechnung des Laserleistungsüberschusses verwendet werden.

Das Bestimmen eines Kennwerts der Leistung des durch das Werkstück hindurchgetretenen Teils des Laserstrahls erfolgt bei einer weiteren Ausgestaltung des Verfahrens anhand der Länge der Schneidfront und des Durchmessers des Laserstrahls an der Oberseite des Werkstücks. Das Verhältnis der Länge der Schneidfront zu dem Durchmesser des Laserstrahls ergibt eine einfache geometrische Abschätzung, zu welchem Teil die Fläche der Schneidfront die Fläche des Laserstrahls in Vorschubrichtung überdeckt und damit eine Abschätzung des Teils des Laserstrahls, der von der Schneidfront absorbiert wird.

Eine Weiterbildung der vorgenannten Ausgestaltung weist das Bestimmen der Leistung des durch das Werkstück hindurchgetretenen Teils des Laserstrahls durch die Fläche und/oder die Intensitätsverteilung des Laserstrahls an der Oberseite des Werkstücks als weitere Parameter auf. Durch eine Korrelation der durch das Prozessbild bestimmten Parameter zur Schneidfront mit vorbestimmten oder gemessenen Parametern des Laserstrahls wird die Berechnung der von dem Werkstück absorbierten Leistung des Laserstrahls oder der nicht absorbierten Leistung des Laserstrahls ermöglicht. Die Parameter des Laserstrahls betreffen unter anderem dessen Kaustik, die Lage seines Fokus und seine Intensitätsverteilung, vor allem entlang des Durchmessers der Querschnittsfläche des Laserstrahls. Hierzu wird bevorzugt die Überlappung der Fläche der Schneidfront mit der Querschnittsfläche des Laserstrahls an der Oberfläche des Werkstücks betrachtet, wobei diese Querschnittsfläche wesentlich durch die Kaustik des Laserstrahls bestimmt ist.

Bei einer weiteren Variante des Verfahrens wird wenigstens das Teilvolumens des Werkstücks, von dem ein Prozessbild aufgenommen wird, mit einer Auflichtbeleuchtung bestrahlt, wobei die aus der reflektierten Auflichtbeleuchtung gewonnen Bilddaten in das Prozessbild integriert werden.

Anhand der Eigenschaften des Reflexionsverhaltens der reflektierten Strahlung der Auflichtbeleuchtung kann gemessen werden, auf wieviel Material der Laserstrahl bezüglich seines aktuellen Vorschubs beim Beleuchten des Teilvolumens zur Aufnahme des Prozessbildes trifft oder treffen wird. Diese Information kann zur Anpassung der Laserleistungsüberschusskompensation verwendet werden. Zum Beispiel können Schnittfugen bereits vorhandener Schnitte durch die Auflichtbeleuchtung ausgemessen werden. Die Auflichtbeleuchtung ist vorzugsweise in die Bearbeitungsvorrichtung, insbesondere deren Sensorik, integriert.

Bevorzugt weist das Verfahren das Vergleichen der Leistung des durchgetretenen Teils des Laserstrahls mit einem ersten Kontrollwert zur Steuerung des Schneidvorgangs auf. Bei einem Überschreiten des ersten Kontrollwerts wird der Schneidvorgang nachreguliert, bevorzugt automatisch, um die Laserbearbeitungsmaschine zu schützen. Der Laserleistungsüberschuss wird vorzugsweise auf ein definiertes Maß begrenzt. Insbesondere geschieht dies durch ein vollständiges Abschalten des Laserstrahls, eine Verringerung der Leistung des Laserstrahls und/oder eine Erhöhung des Vorschubs des Laserstrahls.

Bei einer weiteren Ausgestaltung des Verfahrens erfolgt das Bestimmen der über ein vorgegebenes Zeitintervall in einem vorgegebenen Bereich eingestrahlten Energie aus dem durchgetretenen Teil des Laserstrahls. Die Stärke des möglichen Schadens an einer verwendeten Bearbeitungsvorrichtung hängt wesentlich von der örtlichen und zeitlichen Einwirkung der Leistung des Teils des Laserstrahls ab, der durch das Werkstück hindurchtritt. Diese Einwirkung ergibt sich vorzugsweise aus einer Bestimmung der zeitlich integrierten Bestrahlungsstärke in dem betrachteten Bereich, der bevorzugt zu der Bearbeitungsvorrichtung gehört. **In** die Bestimmung der Bestrahlungsstärke gehen Parameter des Schneidprozesses wie die Schneidrichtung, die Schneidgeschwindigkeit, die Fokuslage des Laserstrahls, der Durchmesser des Fokus, der Gasdruck zur Erzeugung des Gasstrahls, wobei der Gasstrahl insbesondere zu dem Austreiben von Schmelze verwendet wird, und/oder die Position des Schneidkopfs innerhalb der Bearbeitungsvorrichtung mit ein.

Vorteilhaft weist das Verfahren das Vergleichen der eingestrahlten Energie mit einem zweiten Kontrollwert zur Steuerung des Schneidvorgangs auf. Insbesondere kann die zuvor genannte Bestrahlungsstärke mit einem Grenzwert verglichen werden, wobei der Schneidvorgang bei Überschreiten des Grenzwertes nachreguliert wird, zum Beispiel durch ein Anpassen der Laserleistung oder ein Abschalten des Laserstrahls.

Eine Bearbeitungsvorrichtung zur Durchführung eines Verfahrens nach einer der vorgenannten Ausgestaltungen weist die Laserquelle zur Emission des Laserstrahls und den Bildsensor zur Aufnahme des Prozessbildes des gesamten von dem Laserstrahl durchdrungenen Teilvolumens des Werkstücks mit der Schneidfront sowie eine Steuerung zur Steuerung des Verfahrens mit einer Auswerteeinheit zur Bestimmung der Leistung des durch das Werkstück hindurchgetretenen Teils des Laserstrahls auf. Durch die Bestimmung der Leistung des durch das Werkstück hindurchgetretenen Teils des Laserstrahls kann eine solche Bearbeitungsvorrichtung wirksam vor Beschädigung durch den Laserstrahl geschützt werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch einen Querschnitt durch eine Bearbeitungsvorrichtung zum kontrollierten Durchschneiden eines Werkstücks mit einem Laserstrahl;
- Fig. 2: zeigt schematisch einen Querschnitt durch das bestrahlte Werkstück auf einer Auflage;
- Fig. 3: zeigt schematisch ein Prozessbild eines Schneidprozesses in einer ersten Ausgestaltung;
- Fig. 4: zeigt schematisch ein Prozessbild eines Schneidprozesses in einer zweiten Ausgestaltung.

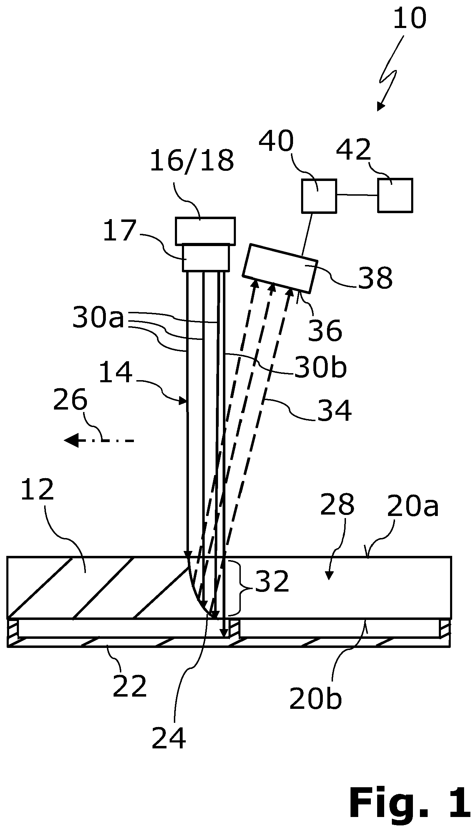

**Fig. 1** zeigt schematisch einen Querschnitt durch eine Bearbeitungsvorrichtung **10** zum kontrollierten Durchschneiden eines Werkstücks **12** mit einem Laserstrahl **14.** Eine Laserstrahlquelle **16,** die eine Fokussiereinrichtung **18** aufweist, strahlt den Laserstrahl 14 durch eine einen Gasstrahl erzeugende Schneiddüse **17** hindurch auf eine Oberseite **20a** des Werkstücks 12 ab, das mit dem Laserstrahl 14 und dem Gasstrahl geschnitten wird. Der Schnitt erfolgt dabei von der Oberseite 20a des Werkstücks 12 zu dessen Unterseite **20b,** mit der das Werkstück 12 auf einer Auflage **22** aufliegt. Die Unterseite 20b des Werkstücks 12 liegt in Richtung des Laserstrahls 14 der Oberseite 20a gegenüber. Der Laserstrahl 14 erzeugt in dem Werkstück 12 zusammen mit dem Gasstrahl eine Schneidfront **24,** die sich von der Oberseite 20a des Werkstücks 12 zu dessen Unterseite 20b erstreckt und in einer Vorschubrichtung **26** des Laserstrahls 14 mit dem Laserstrahl 14 mitbewegt wird. Die Schneidfront 24 wird von einem Teil **30a** des Laserstrahls 14 bestrahlt, wobei das Material des Werkstücks 12 an der Schneidfront 24 durch die Erhitzung aufgeschmolzen und/oder verdampft und anschließend durch den Gasstrahl aus einer Schnittfuge **28** ausgetrieben wird. Dadurch entsteht in Vorschubrichtung 26 des Laserstrahls 14 hinter der Schneidfront 24 die offene Schnittfuge 28, durch die ein Teil **30b** des Laserstrahls 14 ungehindert hindurchstrahlt. Dieser Teil 30b des Laserstrahls 14 tritt aus der Unterseite 20b des Werkstücks 12 aus und trifft auf die Auflage 22 unter dem Werkstück 12, die dadurch erhitzt und gegebenenfalls beschädigt wird. Der Teil 30b des Laserstrahls 14 wird hierbei auch als hindurchgetretener Teil 30b bezeichnet.

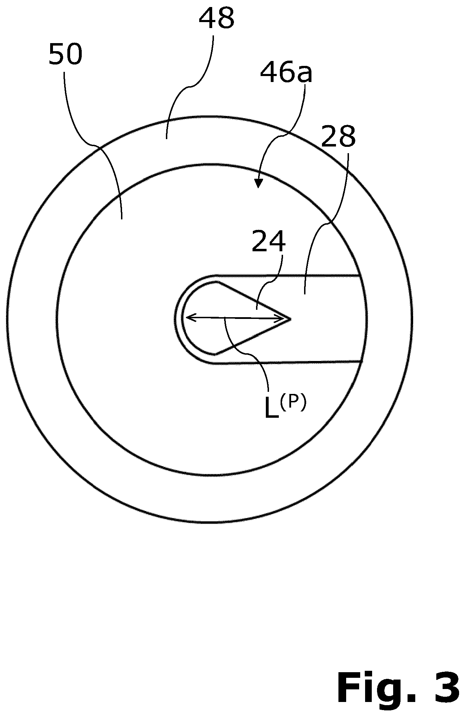

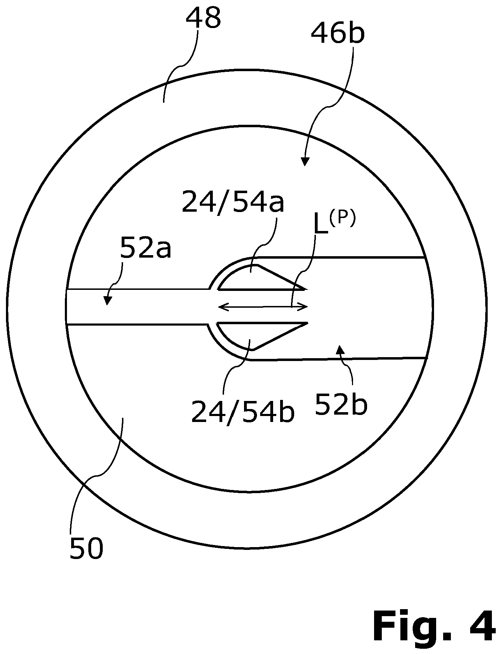

Das erhitzte Material in dem von dem Laserstrahl 14 durchdrungenen Teilvolumen **32** des Werkstücks 12 mit der Schneidfront 24 strahlt Wärmestrahlung ab, die wenigstens teilweise als Beobachtungsstrahlung **34** auf eine Aufnahmefläche **36** eines Bildsensors **38** trifft. Eine Steuerung **40** oder Steuerungseinrichtung mit einer Auswerteeinheit **42** erstellt aus den Daten des Bildsensors 38 ein Prozessbild 46a, 46b (siehe Figs. 3, 4) des von dem Laserstrahl 14 durchdrungenen Teilvolumens 32 des Werkstücks 12 mit der Schneidfront 24. Zu diesem Zweck sind die Steuerung 40, die Auswerteeinheit 42 und der Bildsensor 38 signaltechnisch miteinander verbunden, wie in Fig. 1 dargestellt.

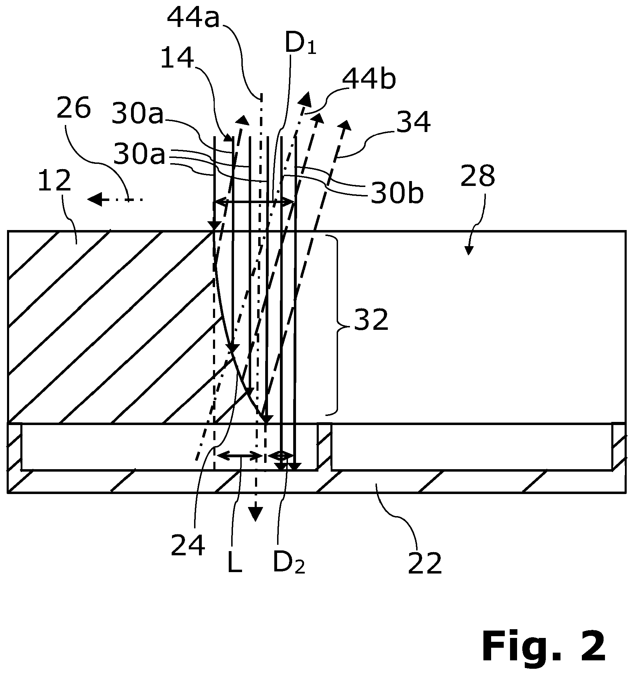

**Fig. 2** zeigt schematisch einen Querschnitt durch das bestrahlte Werkstück 12 auf einer Auflage 22. Dargestellt ist sowohl der Teil 30a des Laserstrahls 14 zum Durchschneiden des Werkstücks 12, der auf die Schneidfront 24 trifft, als auch der hindurchgetretene Teil 30b des Laserstrahls 14, der durch die Schnittfuge 28 durch das Werkstück 12 hindurchstrahlt und auf die Auflage 22 trifft, auf der das Werkstück 12 aufliegt. Der Durchmesser **D₁** des Laserstrahls 14 an der Oberseite 20a des Werkstücks 12, in Fig. 2 durch einen doppelseitigen Pfeil bei der Oberseite 20a des Werkstücks 12 dargestellt, setzt sich daher aus zwei Teilstrecken zusammen. Die erste Teilstrecke ist die Prozesslänge L der Schneidfront 24 in Vorschubrichtung 26 des Laserstrahls 14 in der Ebene der Strahlachse **44a** des Laserstrahls 14 und der Vorschubrichtung 26. Die Vorschubrichtung 26 des Laserstrahls 14 ist in Fig. 2 von rechts nach links. Die zweite Teilstrecke ist der Durchmesser **D₂** des hindurchgetretenen Teils 30b des Laserstrahls 14, der durch die Schnittfuge 28 hindurchstrahlt. Der Durchmesser D₂ ist hierbei in horizontaler Richtung nach Fig. 2 bestimmt, welche senkrecht zum Laserstrahl 14 verläuft. Durch das vom Bildsensor 38 aufgenommene Prozessbild 46a, 46b, siehe nachfolgend beschriebene Figs. 3, 4, können diese Teilstrecken L, D₂ bestimmt werden und zu dem Durchmesser D₁ des gesamten Laserstrahls 14 an der Oberseite 20a des Werkstücks 12 ins Verhältnis gesetzt werden, um den hindurchgetretenen Teil 30b des Laserstrahls 14 des durch die Schnittfuge 28 hindurchtretenden Laserstrahls 14 abzuschätzen.

Ein Winkel einer Strahlachse **44b** der Beobachtungsstrahlung 34 zur senkrechten Strahlachse 44a des Laserstrahls 14 weist typischerweise eine Größe von 0° bis +5° auf.

**Fig. 3** zeigt schematisch ein Prozessbild **46a** eines zu einem Bestrahlungszeitpunkt bestrahlten Teilvolumens 32 (siehe Fig. 1) des Werkstücks 12 bei einer ersten Ausgestaltung des Schneidprozesses. Das Prozessbild 46a wird durch die Schneiddüse 17 (siehe Fig. 1), aus der der Laserstrahl 14 austritt, aufgenommen, wodurch deren Düsenmund **48** das Prozessbild 46a umrandet. Das Prozessbild 46a umfasst insbesondere die Schneidfront 24, die Schnittfuge 28 und eine nicht geschnittene Umgebung **50** der Oberseite 20a des Werkstücks 12 in projizierter Darstellung. In dem Prozessbild 46a weist die Schneidfront 24 eine projizierte Prozesslänge **L^{(P)}** auf, welche die Länge der Schneidfront 24 in horizontaler Richtung nach Fig. 3 bezeichnet. Aus dem Prozessbild 46a mit der projizierten Prozesslänge L^{(P)} der Schneidfront 24 lassen sich durch bildgebende Verfahren anhand der Position und Ausrichtung des Bildsensors 38 (siehe Fig. 1) und gegebenenfalls weiterer optischer Elemente zur Führung der Beobachtungsstrahlung 34 geometrische Parameter der Schneidfront 24, wie die Prozesslänge L^{(P)} der Schneidfront 24 in der Vorschubrichtung 26 des Laserstrahls 14 und/oder die Breite der Schneidfront 24 ermitteln. Auch kann die Intensitätsverteilung der Beobachtungsstrahlung 34 aus dem Prozessbild 46a bestimmt werden.

**Fig. 4** zeigt schematisch ein weiteres Prozessbild **46b** eines zu einem Bestrahlungszeitpunkt bestrahlten Teilvolumens 32 (siehe Fig. 1) des Werkstücks 12 bei einer zweiten Ausgestaltung des Schneidprozesses, bei welcher zunächst ein Schnitt mit einer ersten Schnittfuge **52a** geringerer Breite durchgeführt wird. Darauf erfolgt ein Schnitt mit einer zweiten Schnittfuge **52b** größerer Breite, die wenigstens teilweise an der ersten Schnittfuge 52a entlanggeführt wird. Bedingt durch die erste Schnittfuge 52a teilt sich die Schneidfront 24 in zwei Teilschneidfronten **54a, 54b** auf, die zu beiden Seiten der ersten Schnittfuge 52a durch den Laserstrahl 14 (siehe Fig. 1) erzeugt werden, wobei beide Teilschneidfronten **54a, 54b** die projizierte Prozesslänge L^{(P)} aufweisen. Bei dem Schneiden der zweiten Schnittfuge 52b durchstrahlt ein Teil 30b (siehe Fig. 1) des Laserstrahls 14 ungehindert die erste Schnittfuge 52a. Dieser hindurchgetretene Teil 30b des Laserstrahls 14 kann durch das erfindungsgemäße Verfahren kontrolliert werden, um Schäden an der Bearbeitungsvorrichtung 10 zu vermeiden. Gezeigt ist neben den beiden Schnittfugen 52a, 52b und den Teilschneidfronten 54a, 54b auch deren nicht oder noch nicht geschnittene Umgebung 50 der Oberseite 20a des Werkstücks 12 in projizierter Darstellung und der das weitere Prozessbild 46b umgebende Düsenmund 48 der Schneiddüse 17.

Unter Vornahme einer Zusammenschau aller Figuren der Zeichnung betrifft die Erfindung zusammenfassend ein Verfahren zum Überwachen eines Schneidprozesses eines Werkstücks 12 mit einem Laserstrahl 14, bei dem das Werkstück 12 von einer Oberseite 20a zu seiner der Oberseite 20a in Strahlrichtung des Laserstrahls 14 gegenüberliegenden Unterseite 20b durchschnitten wird. Ein Teil 30a des Laserstrahls 14 wird von einer Schneidfront 24 in dem Werkstück 12 absorbiert, während ein anderer Teil 30b des Laserstrahls 14 durch eine Schnittfuge 28 und die Unterseite 20b des Werkstücks 12 hindurchstrahlt, wobei die Schnittfuge 28 in einer Vorschubrichtung 26 des Laserstrahls 14 hinter der Schneidfront 28 liegt. Im Rahmen des Verfahrens und mittels der Bearbeitungsvorrichtung wird ein Kennwert für die Leistung des hindurchgetretenen Teils 30b des Laserstrahls 14 ermittelt und die Leistung des hindurchgetretenen Teils 30b des Laserstrahls 14 begrenzt, der durch die Schnittfuge 28 hindurchstrahlt.

## Patentansprüche

1. Verfahren zum Überwachen eines Schneidprozesses eines Werkstücks (12) mit einem Laserstrahl (14), wobei das Verfahren folgende Schritte aufweist:
a) Bestrahlen einer Oberseite (20a) des Werkstücks (12) mit einem Laserstrahl (14);
b) Durchschneiden des Werkstücks (12) mit dem Laserstrahl (14) mit einem Schnitt von der Oberseite (20a) des Werkstücks (12) zu einer Unterseite (20b) des Werkstücks (12), wobei die Unterseite (20b) des Werkstücks (12) in Strahlrichtung des Laserstrahls (14) der Oberseite (20a) des Werkstücks (12) gegenüberliegt, unter Ausbildung einer Schneidfront (24) und einer Schnittfuge (28);
e) Begrenzen der Leistung eines durch das Werkstück hindurchgetretenen Teils (30b) des Laserstrahls (14) auf ein vorgegebenes Maß, wobei der hindurchgetretene Teil (30b) des Laserstrahls (14) beim Durchschneiden des Werkstücks (12) auf der Unterseite (20b) des Werkstücks (12) aus dem Werkstück (12) austritt,
**gekennzeichnet durch**,
das Bestimmen eines Kennwerts für die Leistung des durch das Werkstück (12) hindurchgetretenen Teils (30b) des Laserstrahls (14).

2. Verfahren nach Anspruch 1, aufweisend das Bestimmen der Leistung des hindurchgetretenen Teils (30b) des Laserstrahls (14) mit Hilfe der Ausgangsleistung der Laserquelle (16) zur Erzeugung des Laserstrahls (14), der Kaustik des Laserstrahls (14), der Rayleighlänge des Laserstrahls (14), der Position des Fokus des Laserstrahls (14), der Fokuslage, des Fokusdurchmessers, der Werkstückdicke und/oder des Abstands einer Schneiddüse (17), aus der der Laserstrahl (14) austritt, zu dem Werkstück (12).

3. Verfahren nach einem der vorhergehenden Ansprüche, aufweisend
c) das Aufnehmen eines Prozessbildes (46a, 46b) des gesamten von dem Laserstrahl (14) durchdrungenen Teilvolumens (32) des Werkstücks (12) mit der Schneidfront (24), indem dieses Teilvolumen (32) auf eine Aufnahmefläche (36) eines Bildsensors (38) projiziert wird, wobei der Bildsensor (38) oberhalb der Oberseite (20a) des Werkstücks (12) angeordnet ist;
d) das Bestimmen einer Länge (L) der Schneidfront (24) in einer Vorschubrichtung (26) des Laserstrahls (14) in der Ebene einer Strahlachse (44a) des Laserstrahls (14) und der Vorschubrichtung (26) des Laserstrahls (14) anhand des Prozessbildes (46a, 46b).

4. Verfahren nach Anspruch 3, aufweisend das Bestimmen weiterer Parameter des gesamten von dem Laserstrahl (14) durchdrungenen Teilvolumens (32) des Werkstücks (12) anhand des Prozessbildes (46a, 46b), insbesondere geometrischer Parameter und/oder der Intensitätsverteilung von Strahlung (34), die von dem Teilvolumen (32) ausgestrahlt wird.

5. Verfahren nach Anspruch 3 oder 4, bei dem die Strahlachse (44b) der Strahlung (34) zur Aufnahme des Prozessbildes (46a, 46b) ausgehend von dem Teilvolumen (32) des Werkstücks (12) einen Winkel von 0° bis 15° zur Strahlachse (44a) des Laserstrahls (14) aufweist, insbesondere von 0° bis 5°.

6. Verfahren nach einem der Ansprüche 3 bis 5, aufweisend das Bestimmen eines Kennwerts der Leistung des durch das Werkstück (12) hindurchgetretenen Teils (30b) des Laserstrahls (14) anhand der Länge (L) der Schneidfront (24) und des Durchmessers (D₁) des Laserstrahls (14) an der Oberseite (20a) des Werkstücks (12).

7. Verfahren nach Anspruch 6, aufweisend das Bestimmen der Leistung des durch das Werkstück (12) hindurchgetretenen Teils (30b) des Laserstrahls (14) durch die Fläche und/oder die Intensitätsverteilung des Laserstrahls (14) an der Oberseite (20a) des Werkstücks (12) als weitere Parameter.

8. Verfahren nach einem der vorhergehenden Ansprüche und Anspruch 3, wobei wenigstens das Teilvolumen (32) des Werkstücks (12), von dem ein Prozessbild (46a, 46b) aufgenommen wird, mit einer Auflichtbeleuchtung bestrahlt wird, wobei die aus der reflektierten Auflichtbeleuchtung gewonnen Bilddaten in das Prozessbild (46a, 46b) integriert werden.

9. Verfahren nach einem der vorhergehenden Ansprüche, aufweisend das Vergleichen der Leistung des hindurchgetretenen Teils (30b) des Laserstrahls (14) mit einem ersten Kontrollwert zur Steuerung des Schneidvorgangs.

10. Verfahren nach einem der vorhergehenden Ansprüche, aufweisend das Bestimmen der über ein vorgegebenes Zeitintervall in einem vorgegebenen Bereich eingestrahlten Energie aus dem hindurchgetretenen Teil (30b) des Laserstrahls (14).

11. Verfahren nach Anspruch 10, aufweisend das Vergleichen der eingestrahlten Energie mit einem zweiten Kontrollwert zur Steuerung des Schneidvorgangs.

12. Verfahren nach einem der Ansprüche 8 bis 11, wobei die aus der reflektierten Auflichtbeleuchtung gewonnen Bilddaten zum Bestimmen des Volumens des Werkstücks (12) verwendet werden.

13. Bearbeitungsvorrichtung (10), eingerichtet zur Durchführung eines Verfahrens nach einem der vorhergehenden Ansprüche, aufweisend die Laserquelle (16) zur Emission des Laserstrahls (14) und den Bildsensor (38) zur Aufnahme des Prozessbildes (46a, 46b) des gesamten von dem Laserstrahl (14) durchdrungenen Teilvolumens (32) des Werkstücks (12) mit der Schneidfront (24), **gekennzeichnet durch** eine Steuerung (40) zur Steuerung des Verfahrens mit einer Auswerteeinheit (42) zur Bestimmung der Leistung des durch das Werkstück (12) hindurchgetretenen Teils (30b) des Laserstrahls (14).

## Claims

1. A method for monitoring a process of cutting a workpiece (12) with a laser beam (14), wherein the method includes the following steps:
a) irradiating a top side (20a) of the workpiece (12) with a laser beam (14);
b) cutting through the workpiece (12) with the laser beam (14) with a cut from the top side (20a) of the workpiece (12) to an underside (20b) of the workpiece (12), wherein the underside (20b) of the workpiece (12) is opposite the top side (20a) of the workpiece (12) in the beam direction of the laser beam (14), thereby forming a cutting front (24) and a kerf (28);
e) limiting the power of a part (30b) of the laser beam (14) that has passed through the workpiece to a predetermined level, wherein the part (30b) of the laser beam (14) having passed through exits the workpiece (12) on the underside (20b) of the workpiece (12) when cutting through the workpiece (12),
**characterised by**
determining a characteristic value for the power of the part (30b) of the laser beam (14) that has passed through the workpiece (12).

2. The method according to claim 1, comprising determining the power of the part (30b) of the laser beam (14) having passed through based on the output power of the laser source (16) for generating the laser beam (14), the caustic of the laser beam (14), the Rayleigh length of the laser beam (14), the position of the focus of the laser beam (14), the focus position, the focus diameter, the workpiece thickness and/or the distance of a cutting nozzle (17) from which the laser beam (14) exits to the workpiece (12).

3. The method according to any one of the preceding claims, comprising
c) recording a process image (46a, 46b) of the entire partial volume (32) of the workpiece (12) penetrated by the laser beam (14) with the cutting front (24) by projecting this partial volume (32) onto a recording surface (36) of an image sensor (38), wherein the image sensor (38) is arranged above the top side (20a) of the workpiece (12);
d) determining a length (L) of the cutting front (24) in a feed direction (26) of the laser beam (14) in the plane of a beam axis (44a) of the laser beam (14) and the feed direction (26) of the laser beam (14) based on the process image (46a, 46b).

4. The method according to claim 3, comprising determining further parameters of the entire partial volume (32) of the workpiece (12) penetrated by the laser beam (14) based on the process image (46a, 46b), in particular geometric parameters and/or the intensity distribution of radiation (34) emitted by the partial volume (32).

5. The method according to claim 3 or 4, wherein the beam axis (44b) of the radiation (34) for recording the process image (46a, 46b) starting from the partial volume (32) of the workpiece (12) has an angle of 0° to 15° with respect to the beam axis (44a) of the laser beam (14), in particular 0° to 5°.

6. The method according to any one of claims 3 to 5, comprising determining a characteristic value of the power of the part (30b) of the laser beam (14) that has passed through the workpiece (12) based on the length (L) of the cutting front (24) and the diameter (D₁) of the laser beam (14) on the top side (20a) of the workpiece (12).

7. The method according to claim 6, comprising determining the power of the part (30b) of the laser beam (14) that has passed through the workpiece (12) by the area and/or the intensity distribution of the laser beam (14) on the top side (20a) of the workpiece (12) as further parameters.

8. The method according to any one of the preceding claims and claim 3, wherein at least the partial volume (32) of the workpiece (12), from which a process image (46a, 46b) is recorded, is irradiated with incident light illumination, wherein the image data obtained from the reflected incident light illumination is integrated into the process image (46a, 46b).

9. The method according to any one of the preceding claims, comprising comparing the power of the part (30b) of the laser beam (14) having passed through with a first control value for controlling the cutting process.

10. The method according to any one of the preceding claims, comprising determining the energy radiated over a predetermined time interval in a predetermined area from the part (30b) of the laser beam (14) having passed through.

11. The method according to claim 10, comprising comparing the radiated energy with a second control value for controlling the cutting process.

12. The method according to any one of claims 8 to 11, wherein the image data obtained from the reflected incident light illumination is used to determine the volume of the workpiece (12).

13. A machining device (10) configured to carry out a method according to any one of the preceding claims, comprising the laser source (16) for emitting the laser beam (14) and the image sensor (38) for recording the process image (46a, 46b) of the entire partial volume (32) of the workpiece (12) penetrated by the laser beam (14) with the cutting front (24), **characterised by** a controller (40) for controlling the method with an evaluation unit (42) for determining the power of the part (30b) of the laser beam (14) that has passed through the workpiece (12).

## Revendications

1. Procédé de surveillance d'un processus de découpe d'une pièce à usiner (12) avec un faisceau laser (14), le procédé présentant les étapes suivantes :
a) irradiation d'un côté supérieur (20a) de la pièce à usiner (12) avec un faisceau laser (14) ;
b) découpe traversante de la pièce à usiner (12) avec le faisceau laser (14) avec une découpe du côté supérieur (20a) de la pièce à usiner (12) vers un côté inférieur (20b) de la pièce à usiner (12), le côté inférieur (20b) de la pièce à usiner (12) étant en regard du côté supérieur (20a) de la pièce à usiner (12) dans la direction du faisceau laser (14), formant un front de découpe (24) et un trait de découpe (28) ;
e) limitation de la puissance d'une partie (30b) du faisceau laser (14) traversant la pièce à usiner à un niveau prédéfini, la partie (30b) traversante du faisceau laser (14) sortant de la pièce à usiner (12) sur le côté inférieur (20b) de la pièce à usiner (12) lors de la découpe de la pièce à usiner (12),
**caractérisé par**,
la détermination d'une valeur caractéristique pour la puissance de la partie (30b) du faisceau laser (14) traversant la pièce à usiner (12).

2. Procédé selon la revendication 1, présentant la détermination de la puissance de la partie (30b) traversante du faisceau laser (14) en utilisant la puissance de sortie de la source laser (16) pour générer le faisceau laser (14), la caustique du faisceau laser (14), la longueur de Rayleigh du faisceau laser (14), la position du foyer du faisceau laser (14), la position de foyer, le diamètre de foyer, l'épaisseur de la pièce à usiner et/ou la distance d'une buse de découpe (17) d'où le faisceau laser (14) sort vers la pièce à usiner (12).

3. Procédé selon l'une quelconque des revendications précédentes, présentant
c) l'acquisition d'une image de processus (46a, 46b) de l'ensemble du volume partiel (32) de la pièce à usiner (12) pénétré par le faisceau laser (14) avec le front de découpe (24) en projetant ce volume partiel (32) sur une surface d'acquisition (36) d'un capteur d'image (38), dans lequel le capteur d'image (38) est agencé au-dessus du côté supérieur (20a) de la pièce à usiner (12) ;
d) la détermination d'une longueur (L) du front de découpe (24) dans une direction d'avancée (26) du faisceau laser (14) dans le plan d'un axe de faisceau (44a) du faisceau laser (14) et la direction d'avancée (26) du faisceau laser (14) à l'aide de l'image de processus (46a, 46b).

4. Procédé selon la revendication 3, présentant la détermination d'autres paramètres de l'ensemble du volume partiel (32) de la pièce à usiner (12) pénétré par le faisceau laser (14) à l'aide de l'image de processus (46a, 46b), en particulier de paramètres géométriques et/ou de la répartition d'intensité du rayonnement (34) qui est émis par le volume partiel (32).

5. Procédé selon la revendication 3 ou 4, dans lequel l'axe de faisceau (44b) du rayonnement (34) pour acquérir l'image de processus (46a, 46b) provenant du volume partiel (32) de la pièce à usiner (12) présente un angle de 0° à 15° par rapport à l'axe de faisceau (44a) du faisceau laser (14), en particulier de 0° à 5°.

6. Procédé selon l'une des revendications 3 à 5, présentant la détermination d'une valeur caractéristique de la puissance de la partie (30b) du faisceau laser (14) traversant la pièce à usiner (12) à l'aide de la longueur (L) du front de découpe (24) et du diamètre (D₁) du faisceau laser (14) au niveau du côté supérieur (20a) de la pièce à usiner (12).

7. Procédé selon la revendication 6, présentant la détermination de la puissance de la partie (30b) du faisceau laser (14) traversant la pièce à usiner (12) par la surface et/ou la répartition d'intensité du faisceau laser (14) au niveau du côté supérieur (20a) de la pièce à usiner (12) comme autres paramètres.

8. Procédé selon l'une quelconque des revendications précédentes et la revendication 3, dans lequel au moins le volume partiel (32) de la pièce à usiner (12), à partir duquel une image de processus (46a, 46b) est acquise, est irradié par un éclairage de lumière incidente, dans lequel les données d'image obtenues à partir de l'éclairage de lumière incidente réfléchie sont intégrées dans l'image de processus (46a, 46b).

9. Procédé selon l'une quelconque des revendications précédentes, présentant la comparaison de la puissance de la partie (30b) traversée du faisceau laser (14) avec une première valeur de contrôle pour commander le processus de découpe.

10. Procédé selon l'une quelconque des revendications précédentes, présentant la détermination de l'énergie émise sur un intervalle de temps prédéfini dans une zone prédéfinie par la partie (30b) traversée du faisceau laser (14).

11. Procédé selon la revendication 10, présentant la comparaison de l'énergie émise avec une seconde valeur de contrôle pour commander le processus de découpe.

12. Procédé selon l'une des revendications 8 à 11, dans lequel les données d'image obtenues à partir de l'éclairage de lumière incidente réfléchie sont utilisées pour déterminer le volume de la pièce à usiner (12).

13. Dispositif d'usinage (10), conçu pour mettre en œuvre un procédé selon l'une quelconque des revendications précédentes, présentant la source laser (16) pour émettre le faisceau laser (14) et le capteur d'image (38) pour acquérir l'image de processus (46a, 46b) de l'ensemble du volume partiel (32) de la pièce à usiner (12) pénétré par le faisceau laser (14) avec le front de découpe (24), **caractérisé par** une commande (40) pour commander le procédé avec une unité d'évaluation (42) pour déterminer la puissance de la partie (30b) du faisceau laser (14) traversée par la pièce à usiner (12).
